# EUROPÄISCHE PATENTANMELDUNG

(11) **EP 2 048 219 A1**
(43) Veröffentlichungstag der Anmeldung: **15.04.2009**
(21) Anmeldenummer: 07019768.6
(22) Anmeldetag: 10.10.2007
(51) Int. Cl.: C11C 3/10, C10L 1/02, C10L 1/18

(54) **Niedrigviskose Estergemische**

(71) Anmelder: Bayer MaterialScience AG, 51368 Leverkusen (DE)
(72) Erfinder: Köhler, Burkhard, 34289 Zierenberg (DE); Blum, Harald, 51375 Leverkusen (DE); Dörr, Sebastian, 40597 Düsseldorf (DE)

(57) **Zusammenfassung**

Die Erfindung betriff die Herstellung von niedrigviskosen Estergemischen durch Umesterung von pflanzlichen oder tierischen Fetten oder Ölen mit monofunktionellen Estern.

## Beschreibung

Die Erfindung betrifft die Herstellung von niedrigviskosen Estergemischen durch Umesterung von pflanzlichen oder tierischen Fetten oder Ölen mit monofunktionellen Estern.

Die randomisierende Umesterung von verschiedenen Triglyceriden untereinander, katalysiert mit Basen, Säuren oder Enzymen ist bekannt und in Journal of the American Oil Chemists' Society (1953) 30, 320-325 ; Biotechnology and Bioengineering (2006) 94 (5), 877-887 ; Grasas y Aceites (2005) 56 (4), 267-275 ; Journal of Food Science (2005) 70 (6), C365-C372 ; JP 11225671 ; Fett/Lipid (1998) 98 (2), 60-65 ; Journal of Industrial and Engineering Chemistry (1948) 40, 1183-1190 beschrieben. Diese Umesterung führt wiederum zu Triglyceriden mit vergleichbar hoher Viskosität und hohem Erstarrungspunkt. Daher sind sie beispielsweise als Hilfs- oder Zusatzstoff oder Lösemittel für Lacke nicht geeignet.

Ester mit niedrigerer Viskosität und niedrigerem Erstarrungspunkt können durch Umesterung von Triglyceriden mit Monoalkoholen zu Fettsäurealkylestern und Glycerin erhalten werden . Diese Verfahrensweise ist ebenfalls gut bekannt und beschrieben in Bioresource Technology (2006) 98 (3), 639-647 ; Industrial & Engineering Chemistry Research (2005) 44 (25), 9535-9541 ; Chemical Engineering & Technology (1999) 22 (1), 70-75. Nachteilig bei diesen Verfahren ist, dass Glycerin als Zwangsanfallprodukt entsteht, welches abgetrennt werden muss, da insbesondere beim Einsatz als Lösemittel oder Zusatzstoff in Lacken freie OH-Gruppen aufgrund ihrer Reaktivität z.B. gegenüber Isocyanatgruppen in der Regel problematisch sind.

Ferner ist die Umesterung von Triglyceriden mit Carbonsäuren bekannt und in Tluszcze Jadalne (2002) 37 (1/2), 82-92 beschrieben. Bei diesem Ansatz müssen nach erfolgter Umesterung die abgespaltenen Fettsäuren abgetrennt werden, um Estermischungen zu erhalten, die als Löse- oder Verdünnungsmittel in der Lacktechnologie eingesetzt werden können.

Ausgehend von im Stand der Technik beschriebenen Verfahrens bestand daher nun die Aufgabe der vorliegenden Erfindung darin, ein technisch möglichst einfaches Verfahren zur Herstellung von Estern oder Estergemischen bereitzustellen, welche bei 23°C mit einer Viskosität von < 50 mPas flüssig sind und einen Erstarrungspunkt von unter - 10°C aufweisen, und eine Abtrennung von hydroxyl- und/oder carbonsäuregruppenhaltigen Verbindungen entfällt.

Es wurde nun gefunden, dass die Umesterung von Triglyceriden mit Alkylestern von aliphatischen oder cycloaliphatischen Carbonsäuren möglich ist und dadurch Estergemische mit den gewünschten Eigenschaften erhalten werden können. Besonders vorteilhaft ist, dass weder OH noch COOHfunktionelle Spaltprodukte anfallen, deren Abtrennung insbesondere für den Einsatzbereich der Zusatzstoffe für Lacke erforderlich wäre.

Gegenstand der Erfindung ist daher ein Verfahren zur Herstellung von Estergemischen sowie die so erhältlichen Estergemische selbst, bei dem Triglyceride mit Alkyl- oder Cycloalkylestern aliphatischer oder cycloaliphatischer Monocarbonsäuren umgesetzt werden.

Triglyceride im Sinn der Erfindung sind Fette und Öle pflanzlichen, tierischen und/oder synthetischen Ursprungs, vorzugsweise pflanzlichen Ursprungs.

Bevorzugte Triglyceride sind die Triester des Glycerins mit C6- bis C22-Carbonsäuren. Bevorzugte Triester des Glycerins der vorgenannten Art besitzen keine freien OH-Gruppen und weisen ferner 6 oder weniger, bevorzugt 3 oder weniger olefinische Doppelbindungen auf.

Triglyceride pflanzlichen Ursprungs sind beispielsweise Palmöl, Kokosöl, Olivenöl, Rapsöl und Öle anderer Samen von Kreuzblütlern (Leindotter, Krambe, Rübsen, Senf), Sonnenblumenöl, Maiskeimöl, Baumwollsaatöl, Erdnussöl, Haselnussöl, Mohnöl, Leinöl, Saffloröl, Distelöl, Spitzklettenöl, Holzöl, Sojaöl und die Öle anderer Samen von Schmetterlingsblütlern (Lupine, Erbsenstrauch), Hanföl, Ringelblumenöl, iberisches Drachenkopföl, Nachtkerzenöl, Korianderöl, Schwarzkümmelöl, Jatrophaöl, Ricinusöl oder Purgiernussöl. Bevorzugte Öle pflanzlichen Ursprungs sind Rapsöl, Sonnenblumenöl, Palmöl und Sojaöl.

Triglyceride tierischen Ursprungs sind beispielsweise Butterfette, Schmalze, Talge, Trane, Fischöle oder Fischleberöle.

Grundsätzlich können die genannten Triglyceride im erfindungsgemäßen Verfahren einzeln oder in beliebigen Mischungen untereinander eingesetzt werden.

Die Alkyl- oder Cycloalkylester aliphatischer oder cycloaliphatischer Monocarbonsäuren können im Alkyl- oder Cycloalkylrest auch Heteroatome wie Sauerstoff in Form von Ethergruppen enthalten. Auch beliebige Mischungen der Alkyl- oder Cycloalkylester können eingesetzt werden.

Die zur Umesterung eingesetzten Alkyl- oder Cycloalkylester sind bevorzugt frei von OH-Gruppen.

Besonders bevorzugt werden lineare oder verzweigte Alkylester monofunktioneller aliphatischer Carbonsäuren eingesetzt.

Diese weisen bevorzugt 1 bis 10, besonders bevorzugt 2 bis 8 Kohlenstoffatome im Alkylrest auf.

Bevorzugt weisen die aliphatischen Carbonsäuren der linearen oder verzweigten Alkylester monofunktioneller aliphatischer Carbonsäuren 1 bis 10, bevorzugt 2 bis 8 Kohlenstoffatome auf.

In einer bevorzugten Ausführungsform werden die linearen oder verzweigten Alkylester monofunktioneller aliphatischer Carbonsäuren so ausgewählt, dass die Anzahl an Kohlenstoffatomen darin wenigstens 4 beträgt.

Beispiele für lineare oder verzweigte Alkylester monofunktioneller aliphatischer Carbonsäuren sind n-Butyl-, Isobutyl-, 2-Butyl-, Amyl-, Isoamyl-, Ethoxyethyl-, Butoxyethyl-, Methoxypropyl-, n-Hexyl- oder 2-Ethyl-hexyl-formiat,
n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-acetat,
Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-propionat,
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-butyrat,
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-isobutyrat,
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-valerat,
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-pivalat,
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-capronat und
Methyl-, Ethyl-, n-Propyl-, Isopropyl-, n-Butyl-, Isobutyl-, 2-Butyl-, Amyl-, Isoamyl, Methoxyethyl, Ethoxyethyl-, Butoxyethyl-, Methoxypropyl, n-Hexyl oder 2-Ethyl-hexyl-ethylhexanoat.

Besonders bevorzugt sind Monoester der vorgenannten Art auf Basis von Essigsäure- oder Propionsäure.

Ganz besonders bevorzugt Butylacetat und Ethylpropionat, wobei auch deren beliebige Mischungen eingesetzt werden können.

Das Gewichtsverhältnis der eingesetzten Triglyceride zu den eingesetzten monofunktionellen Estern liegt im Allgemeinen bei 0,1 bis 10, bevorzugt 0,1 bis 3, besonders bevorzugt 0,5 bis 2.

Bevorzugt wird die Reaktion in Gegenwart zumindest eines Katalysators durchgeführt, wobei Katalysatormengen von 0,00001 bis 0,3 Gewichtsteilen bezogen auf die Mischung aus Triglycerid und Monoester bevorzugt sind.

Besonders bevorzugt beträgt die Katalysatormenge 0,00001 bis 0,0,2 Gewichtsteile. Falls Enzyme als Katalysatoren eingesetzt werden so beträgt die Menge 0,001 bis 0,1 Gewichtsanteilen.

Katalysatoren im Sinne der Erfindung sind beispielsweise Alkali- oder Erdalkali-Carbonate, - Oxide, -Hydroxide oder -Alkoholate, Wismut-, Zinn-, Zink-, Titan-, Kobalt-, Eisen-, Antimon-oder Zirkonverbindungen, Amidine, wie DBU oder DBN, Guanidine, wie Tetra- oder Pentamethylguanidin oder Amine, wie DABCO, wobei die nicht aminischen Katalysatoren bevorzugt sind. Die basischen Katalysatoren können nach der Reaktion durch Zugabe von Säuren, wie p-Toluolsulfonsäure oder Dibutylphosphat, deaktiviert werden. Eine Katalyse durch Brönsted-Säuren ist ebenfalls möglich, jedoch nicht bevorzugt.

Enzyme im Sinne der Erfindung sind Lipasen, wobei aber die chemischen Katalysatoren bevorzugt sind.

Grundsätzlich können zur Umesterung neben den Monoestern auch C 1 bis C18-Alkohole zugesetzt werden.

Beispiele solcher Alkohole sind Methanol, Ethanol, Isopropanol, n-Propanol, n-Butanol, sec-Butanol, Diole wie z.B. Ethylenglykol, Diethylenglykol, Triole und Tetraole wie z.B. Glycerin, Trimethylolpropan, Pentaerythrit und/oder Mono- oder Diglyceride. Bezogen auf die Menge des Monoesters werden solche Alkohole allerdings bevorzugt höchstens in Mengen von 25 Gew.-% eingesetzt. Besonders bevorzugt wird auf den Zusatz solcher Alkohole verzichtet.

In einer bevorzugten Ausführungsform werden die Triglyceride zusammen mit Monoestern und Katalysatoren so lange umgesetzt bis sich ein chemisches Gleichgewicht eingestellt hat.

Die Reaktionstemperatur bei der Umesterung beträgt bevorzugt 160 bis 260°C.

Dem Reaktionsgemisch können ferner Antioxidantien, wie Hydrochinon, Hydrochinonmonoalkylether oder sterisch gehinderte Phenole im Allgemeinen in Mengen von 0,01 bis 0,5 Gew.-% bezogen auf das Reaktionsgemisch zugesetzt werden.

Gegebenenfalls überschüssig eingesetzter Monoester kann im nach dem erfindungsgemäßen Verfahren erhaltenen Estergemisch verbleiben oder auch abgetrennt werden.

Nach Abtrennung des nicht umgesetzten Monoesters besitzen die Estermischungen bei 23°C bevorzugt Scherviskositäten von 12 bis 50 mPas, besonders bevorzugt 18 bis 40 mPas.

Nach Abtrennung des nicht umgesetzten Monoesters besitzen die Estermischungen bevorzugt Erstarrungspunkte von unterhalb 0°C, besonders bevorzugt von -40 bis -10°C

Ein weiterer Gegenstand der vorliegenden Erfindung sind die nach dem vorliegenden Verfahren erhältlichen Estergemische sowie deren Verwendung als Lösungsmittel, Hilfsmittel bzw. Prozessagens für Beschichtungsmittel, Lacke, Anstrichstoffe, Klebstoffe, Kaschiermaterialien, Dichtstoffe, Druckfarben, Tinten, Färbungsmittel, Farbstoffe, Beizen, Korrosions- und Rostschutzmitteln, Imprägniermitteln und graphischen Materialien, als Hilfsmittel, Weichmacher, Verlaufsmittel, Reaktivverdünner, Additiv, in Kosmetika bzw. als Kosmetikrohstoff, zur Herstellung pharmazeutischer Formulierungen, als Schmier-, Gleit-, Trenn- oder Kühlmittel, als Öl, in Sonnenschutzmitteln, in bzw. als Verdünnungs-, Reinigungs- bzw. Vorbehandlungsmittel, in Lebensmitteln aller Art.

Ein ebenfalls mögliche Verwendung der erfindungsgemäß erhältlichen Estergemische ist der Einsatz als Kraftstoff oder als Additiv in Kraftstoffen für Verbrennungsmotore oder als Ölphase einer Öl-in-Wasser-Emulsion, die als Kühlschmierstoff bei der Metallverarbeitung verwendet wird.

Für die vorgenannten Einsatzgebiete ist es zunächst unerheblich, ob die Estermischung noch Restmengen an zur Umesterung eingesetztem Monoester enthält oder nicht. Bevorzugt ist die Abtrennung des zur Umesterung eingesetzten Monoesters nach Abschluss der Umesterungsreaktion.

Werden die erfindungsgemäßen Estergemische als Kraftstoff oder als Zusatz in Kraftstoffen für Verbrennungsmotore eingesetzt, können Additive wie Cetan-Zahlverbesserer, Antioxidantien, Entschäumer, Korrosionsinhibitoren, Fliessverbesserer, Tenside oder Qualmverminderer zugesetzt werden.

### Beispiele

Die Festkörper-Bestimmung erfolgte durch Abwiegen auf einer Schnellwaage von Mettler-Toledo bei 125°C bis zur Gewichtskonstanz.

Die GPC-Analyse (Gel-Permeations-Chromatographie) wurde mit THF als Eluent aufgenommen.
Die Auswertung erfolgte durch Bestimmung der Peak-Flächen-Prozente.

Die Viskositäts-Bestimmung erfolgte mit einem Kegel-Platte-Viskosimeter von Anton-Parr bei 23°C. Die Viskositäten werden in der Einheit [mPas] angegeben.

### Allgemeine Herstellvorschrift

Man erhitzte die Mischung aus 2000g Sojaöl, 1000g monofunktionellen Ester, 1g Dibutylzinnoxid und 2g Hydrochinon in einem Autoklaven unter Eigendruck für 16 Stunden auf 200°C. Man maß die Viskosität des Reaktionsgemisches vor der Umsetzung, nach der Umsetzung und nach dem destillativen Abtrennen des nicht abreagierten Esters der Formel I (in mPas). Man maß ferner den Feststoffgehalt mittels einer Schnellwaage bei 125°C nach der Umsetzung und nach dem destillativen Abtrennen des nicht abreagierten Esters der Formel I (in %). Die Zusammensetzung des Reaktionsgemischs wurde nach der Reaktion durch GPC bestimmt (Anteil an Triglycerid, Diglyceridmonoalkanoat, Monoglyderiddialkanoat und Alkylfettsäureester in Gew.-%), wobei der nicht abreagierte Ester der Formel I durch die Methode nicht erfasst wird.

Die Stockpunkte der Reaktiongemische vor der Reaktion lagen bei allen Beispielen bei -10°C, nach der Reaktion bei -30°C (gemessen durch Abkühlung in einem Kältebad und Auftreten des ersten Niederschlags). Als Kältebad wurde Trockeneis in Aceton verwendet. Es wurde visuell beurteilt, bei welcher Temperatur sich in einem mit 3g der Probe gefüllten Reagenzglas ein Niederschlag bildete.

Die Viskosität des Sojaöls vor der Umsetzung betrug 57 mPas.

| **Beispiel** | **1** | **2** | **3** | **4** |
|---|---|---|---|---|
| Ester der Formel I | Butylacetat | Ethylbutyrat | Ethylpropionat | Methoxyethylacetat |
| Viskosität vor Umsetzung | 3 | 2 | 7 | 9 |
| Viskosität nach Umsetzung | 8 | 5 | 6 | 12 |
| Viskosität nach Destillation | 28 | 37 | 31 | 20 |
| Ermittelter Festgehalt | | | | |
| Feststoff nach Umsetzung | 72,8 | 68,5 | 71,1 | 72,3 |
| Feststoff nach Destillation | 97,5 | 99,5 | 98,9 | 96,4 |
| Anteile in % (laut GPC-Analyse): | | | | |
| Triglycerid | 38 | 68 | 55 | 45 |
| Digylceridmonoalkanoat | 32 | 20 | 27 | 29 |
| Monoglyceriddialkanoat | 4 | 3 | 4 | 5 |
| Alkylfettsäureester | 23 | 7 | 13 | 19 |

In einem weiteren Versuch erhitzte man die Mischung aus 8000g Sojaöl, 4000g Essigsäurebutylester, 4g Dibutylzinnoxid und 8g Hydrochinon in einem Autoklaven unter Eigendruck für 16 Stunden auf 240°C. Man maß die Viskosität des Reaktionsgemisches nach der Umsetzung und nach dem destillativen Abtrennen des nicht abreagierten Esters der Formel I (in mPas). Dabei zeigte sich, dass die Viskosität nach der Umsetzung aber vor der Destillation bei 12,8 mPas lag. Nach Abtrennung des Butylacetat wurde eine Viskosität von 20,8 mPas gefunden (Festgehalt 99%).

Man erkennt aus den Versuchen, dass durch die erfindungsgemäße Reaktion eine randomisierende Umesterung erfolgt, die zu Estergemischen mit vorteilhaften Eigenschaften (niedrige Viskosität bei gleichzeitig niedrigem Stockpunkt) führt.

## Patentansprüche

1. Verfahren zur Herstellung von Estergemischen, bei dem Triglyceride mit Alkyl- oder Cycloalkylestern aliphatischer oder cycloaliphatischer Monocarbonsäuren umgesetzt werden.

2. Verfahren gemäß Anspruch 1, **dadurch gekennzeichnet, dass** die Triglyceride Triester des Glycerins mit C6- bis C22-Carbonsäuren sind.

3. Verfahren gemäß Anspruch 2, **dadurch gekennzeichnet, dass** die Triester des Glycerins frei von OH-Gruppen sind und ferner 6 oder weniger olefinische Doppelbindungen aufweisen.

4. Verfahren gemäß einem der Ansprüche 1 bis 3, **dadurch gekennzeichnet, dass** die zur Umesterung eingesetzten Alkyl- oder Cycloalkylester frei von OH-Gruppen sind.

5. Verfahren gemäß einem der Ansprüche 1 bis 4, **dadurch gekennzeichnet, dass** als Alkyl- oder Cycloalkylester lineare oder verzweigte Alkylester monofunktioneller aliphatischer Carbonsäuren eingesetzt werden.

6. Verfahren gemäß einem der Ansprüche 1 bis 5, **dadurch gekennzeichnet, dass** als Alkyl- oder Cycloalkylester Butylacetat, Ethylpropionat oder deren beliebige Mischungen eingesetzt werden.

7. Verfahren gemäß einem der Ansprüche 1 bis 6, **dadurch gekennzeichnet, dass** das Verfahren in Gegenwart mindestens eines Katalysators durchgeführt wird.

8. Estergemische erhältlich nach einem Verfahren gemäß einem der Ansprüche 1 bis 7.

9. Estergemische gemäß Anspruch 8, **dadurch gekennzeichnet, dass** sie bei 23°C Scherviskositäten von 12 bis 50 mPas und Erstarrungspunkte von unterhalb 0°C aufweisen.

10. Verwendung der Estergemische gemäß Anspruch 8 oder 9 als Lösungsmittel, Hilfsmittel oder Prozessagens.

11. Verwendung der Estergemische gemäß Anspruch 8 oder 9 als Kraftstoff oder als Additiv in Kraftstoffen für Verbrennungsmotore.

12. Kraftstoffe für Verbrennungsmotore enthaltend ein Estergemisch gemäß Anspruch 8 oder 9.
